# EUROPÄISCHE PATENTANMELDUNG

(11) **EP 0 654 517 A2**
(43) Veröffentlichungstag der Anmeldung: **24.05.1995**
(21) Anmeldenummer: 94117521.8
(22) Anmeldetag: 07.11.1994
(51) Int. Cl.: C09K 21/00, C09K 3/18, C04B 35/63, C04B 28/00

(54) **Umsetzungsprodukte aus einer Aluminiumverbindung, einer Bor enthaltenden Säure, einer Phosphor enthaltenden Säure und eines Amins**

(30) Priorität: 19.11.1993 DE 4339474
(71) Anmelder: BAYER AG, 51368 Leverkusen (DE)
(72) Erfinder: von Bonin, Wulf, Dr., D-51519 Odenthal (DE)

(57) **Zusammenfassung**

Umsetzungsprodukte aus einer Aluminiumverbindung (A), einer Bor enthaltenden Säure (B), einer Phosphor enthaltenden Säure (P), und eines Amins (N) sind dadurch gekennzeichnet, daß 1 Mol (A) mit 0,3 bis 1,19 Molen B, (1,8 bis 2,19) + x Molen P und (0,3 bis 3,69) + y Molen N umgesetzt wurde, wobei gilt x = -1,5 bis +1,5 und y = 0 bis 12. Diese Umsetzungsprodukte können gegebenenfalls bis zu 30 Mol Wasser pro Mol eingesetztes A enthalten und können auf die vielfältigste Weise, z.B. als Bindemittel, Beschichtungsmittel oder Isoliermaterial verwendet werden.

## Beschreibung

Die vorliegende Erfindung betrifft Umsetzungsprodukte aus einer Aluminiumverbindung, einer Bor enthaltenden Säure, einer Phosphor enthaltenden Säure und eines Amins, wäßrige Zubereitungsformen davon, die Herstellung entsprechender Bindemittel und deren Verwendung für die verschiedensten Zwecke.

Wäßrige Lösungen, die ein Umsetzungsprodukt aus einem Mol Aluminiumhydroxid und einem Mol Ortho-Phosphorsäure enthalten, sind nicht stabil, weil aus ihnen im Laufe der Zeit unlösliches Aluminiumphosphat ausgeschieden wird.

Borsäure bildet mit Ortho-Phosphorsäure ein ebenfalls unlösliches Borphosphat. Andererseits bildet Ortho-Borsäure (B(OH)₃) lösliche Aminsalze, Aluminiumhydroxid (Al (OH)₃) jedoch nicht.

Aluminiumphosphate mit weniger Tendenz zum Ausfallen erhält man, wenn man in wässrigem Medium pro Mol Aluminiumhydroxid mehr als ein Mol Ortho-Phosphorsäure einsetzt.

Kristallin abgeschiedene Aluminium- und Borphosphate haben keine Bindemitteleigenschaften, da die Kristallite nur ein geringes Haftungsvermögen besitzen. Bindemitteleigenschaften wären nur bei amorph-glasartiger Abscheidung solcher Phosphate zu erwarten. Solche amorphen Gläser können in einer Schmelze bei Temperaturen über 1000°C gebildet werden, was sie wegen der hohen anzuwendenden Temperaturen für die Herstellung von Bindemitteln jedoch uninteressant macht.

In eigenen älteren Patentanmeldungen werden wasserlösliche Kombinationen aus Aluminiumphosphaten, Aminsalzen und Borsäuren beschrieben, die bei erhöhten Temperaturen unter Aufschäumen keramisieren und verglasen und z.B. für Zwecke des Brandschutzes einsetzbar sind. Diese haben aber eine andere Zusammensetzung, sie sind, bezogen auf enthaltenes Aluminium, reicher an Borsäure und Phosphorsäure als die Produkte der vorliegenden Erfindung.

Produkte mit hohen Borgehalten zeigen ein besonders starkes Intumeszenzverhalten, was nicht immer erwünscht ist.

Es wurden nun Umsetzungsprodukte aus einer Aluminiumverbindung (A), einer Bor enthaltenden Säure (B), einer Phosphor enthaltenden Säure (P) und eines Amins (N) gefunden, die dadurch gekennzeichnet sind, daß
1 Mol A mit
0,3 bis 1,19 Molen B,
(1,8 bis 2,19) + x Molen P und
(0,3 bis 3,69) + y Molen N
umgesetzt wurde, wobei gilt
x = -1,5 bis +1,5 und
y = 0 bis 12,
und die Umsetzungsprodukte gegebenenfalls bis zu 30 Mol Wasser pro Mol eingesetztes A enthalten.

Bei bevorzugten erfindungsgemäßen Umsetzungsprodukten wird
1 Mol A mit
0,8 bis 1,19 Molen B,
1,8 bis 2,19 Molen P und
1,8 bis 3,19 Molen N umgesetzt.

Diese bevorzugten Umsetzungsprodukte enthalten gegebenenfalls bis zu 12 Mol Wasser pro Mol eingesetztes A.

Eine 5 bis 95 gew.-%ige waßrige Lösung der erfindungsgemäßen Umsetzungsprodukte ist eine handhabbare Zubereitungsform davon. Bevorzugt sind derartige wäßrige Lösungen, die 40 bis 80 gew.-%ig sind.

Als Aluminiumverbindung (A) ist Aluminiumhydroxid besonders geeignet. Es kommen aber auch chernisch äquivalente Aluminiumverbindungen in Betracht, aus denen durch Umsetzung mit Phosphorsäuren Aluminiumphosphate gebildet werden können, wie etwa Aluminiumoxide, Aluminiumoxidhydrate, Aluminiumacetate, Aluminiumformiate, Aluminiumzitrate, Aluminiumnitrate, Aluminiumhalogenide und Aluminiumcarbonate.

Als Bor-enthaltende Säure (B) ist Orthoborsäure besonders geeignet. Man kann aber auch chemisch äquivalente Borverbindungen einsetzen, aus denen sich in wäßrigem Medium Orthoborsäure bilden kann, z.B. Boroxide, deren Hydratationsprodukte und Borate.

Als Phosphor-enthaltende Säure (P) ist Orthophosphorsäure besonders geeignet. Es kommen auch chemisch äquivalente Phosphorverbindungen in Betracht, aus denen sich Orthophosphorsäure bilden kann, z.B. Phosphoroxide, Phosphorhalogenide, Phosphorester, deren Hydrolisierungsprodukte und deren Hydratisierungsprodukte.

Als Amine (N) sind Mono-, Di- und Triethanolamin sowie Ammoniak besonders geeignet. Es kommen aber auch andere wasserlösliche Mono-, Di- und Polyamine und deren Alkoxylierungs-, insbesonders Ethoxylierungsprodukte, in Frage, beispielsweise Ethylendiamin, Propylendiamin, Polyethylenpolyamine, Polypropylenpolyamine, Hexamethylendiamin, Morpholin, Piperazin, Methylamin, Dimethylamin, Ethylamin, N-Dimethylpropylendiamin-1,3, Dihydroxyethylethylendiamin und N-Methyl-ethanolamin. Es können auch Gemische verschiedener Amine und Gemische von Aminen mit Ammoniak zum Einsatz gelangen.

Die Ausgangsmaterialien werden vorzugsweise in einem wäßrigen oder wasserhaltigen Medium zur Umsetzung gebracht. Besonders die Umsetzung der Borsäure mit Amin kann auch ohne Wasser durchgeführt werden, jedoch sind auch hier wenigstens geringe Wasserzusätze von Vorteil.

Man kann beispielsweise zunächst ein Umsetzungsprodukt aus einer Aluminiumverbindung und einer Phosphor enthaltenden Säure in wäßrigem Medium herstellen. Bevorzugt ist die Arbeitsweise in 30 bis 85 gew.-%iger, insbesondere 50 bis 75 gew.-%iger, wäßriger Lösung und bei 50 bis 100°C, gegebenenfalls auch bei höherer Temperatur. Als besonders geeignet hat sich hierbei der Eintrag von festem Aluminiumhydroxid als Pulver in vorgelegte erwärmte Phosphorsäure unter gutem Rühren erwiesen.

Man kann dann ein Umsetzungsprodukt aus einer Bor enthaltenden Säure und einem Amin oder Arningemisch herstellen. Bei dieser Umsetzung kann gegebenenfalls Wasser zugegen sein. Hier hat es sich bewährt, in das vorgelegte Amin z.B. bei 10 bis 120°C, vorzugsweise 50 bis 95°C, die Bor-enthaltende Säure als Feststoff unter gutem Rühren einzutragen.

Die beiden separat hergestellten Umsetzungsprodukte können dann durch gutes Vermischen bei z.B. 50 bis 120°C, vorzugsweise 70 bis 95°C, zum erfindungsgemäßen Umsetzungsprodukt umgesetzt werden. Hier hat es sich als zweckmäßig erwiesen, eine Komponente, vorzugsweise die Aluminiumphosphatlösung, zu der auf z.B. 50 bis 120°C, vorzugsweise 70 bis 95°C, vorgeheizten anderen Komponente unter guter Vermischung hinzuzudosieren. Es wird vorzugsweise bis zum Erreichen einer weitgehend klaren Lösung gerührt. Anschließend kann das Gemisch gegebenenfalls mit Wasser verdünnt oder aufkonzentriert und dann abgekühlt werden. Man erhält so eine lagerstabile, d.h. nicht zu Ausfallungen kristalliner Art neigende Lösung erfindungsgemäßer Umsetzungsprodukte.

Diese Lösung kann gegebenenfalls noch weiter modifiziert werden, beispielsweise durch den Zusatz von Hilfsmitteln, Füll- und/oder Zusatzstoffen. Hier sind zu nennen. Tenside, Farbgeber, Weichmacher (vorzugsweise alkoxylierte Amine), Glykole, Antioxidantien, Hydrophobierungsmittel (vorzugsweise auf der Basis von Fettaminen, Silikonen oder fluororganischen Verbindungen), Füllstoffe und Füllstoffgemische (z.B. Metalle wie Nickel, Aluminium, Silber, Kupfer und Gold, sowie Glas, Holz, Kohlenstoff, Stärke, Metalloxide, Metallsilikate, Gesteinsmehle, Kunststoffe, Sand, Kieselsäuren und Quarz) in Form von Pulvern, Kristalliten, massiven oder hohlen Kugeln, Blättchen, Hanteln sowie Fasern, Drähten, Geweben, Gewirken, Gestricken, Strängen und Geflechten (z.B. auf mineralischanorganischer, organischer, gemischt organisch-mineralischer oder metallischer Basis). Es können auch thermisch blähfähige Zusätze gewählt werden, z.B. blähfähige Silikate, Borsilikate, Glimmer, Graphite (in nicht, teilweise oder vollständig aufgeblähter Form), wobei die erfindungsgemäßen Umsetzungsprodukte auch als Bindemittel für derartige Zusätze fungieren können.

Wenn die erfindungsgemäßen Umsetzungsprodukte als Bindemittel eingesetzt werden, kann das Abbinden durch Tempern bei beispielsweise 100 bis 600°C, vorzugsweise 150 bis 300°C, erfolgen und so deren Übergang in einen harten, wasserbeständigen Zustand durchgeführt werden. Gleiches gilt auch für Beschichtungen und Tränkungen, die mit den erfindungsgemäßen Umsetzungsprodukten vorgenommen wurden. Vielfach reicht bereits die beim Auftrocknen unter 100°C erzielbare Wasserbeständigkeit aus. Solcherart aufgetrocknete Beschichtungen zeigen auch einen deutlichen Antifoggingeffekt, d.h. sie verhindern das Beschlagen der damit ausgerüsteten Oberfläche in feucht-warmer Luft.

Ähnlich wie Aluminiumphosphate, Zeolithe und saure Tone haben aufgetrocknete oder z.B. bis zu 1400°C getemperte, erfindungsgemäße Umsetzungsprodukte auch katalytische Effekte, z.B. bei der Umwandlung von Kohlenwasserstoffen. Hierfür ist es zweckmäßig, die Produkte auf Trägern einzusetzen, die z.B. bei 200 bis 1400°C getempert und dabei gegebenenfalls oxidativ verändert wurden.

Die erfindungsgemäßen Umsetzungsprodukte und ihre flüssigen Zubereitungsformen sind z.B. als Tränkmaterialien für saugfähige Substrate von Interesse, etwa für Papier, Holz, Membranen, porösen Kohlenstoff, organische und anorganische Vließstoffe, Schaumstoffe, Gewebe, Gewirke, Gestricke, Gelege, Geflechte und Stränge. Sie verleihen diesen in feuchtem, getrockenetem oder nacherhitztem Zustand Flammwidrigkeit und Feuerbeständigkeit, sowie intumeszentes Verhalten.

Solcherart ausgerüstete Papiere, Dichtungen, Gewebe und Schaumstoffmaterialien können für Brandschutzzwecke verwendet werden.

Auf Textilien zeigen erfindungsgemäße Umsetzungsprodukte eine Appreturwirkung und im Waschmittelbereich eine Sequestrierwirkung. Bei der Lederausrüstung haben sie gerbende und füllende Eigenschaften. Als Zusatz zu Zementen, Gips und Mörteln, zeigen sie abbindungsregulierende Eigenschaften.

Wenn die neuen Produkte in getrockneter und gegebenenfalls pulverisierter Form vorliegen, wobei als Trocknungstemperaturen solche von 10 bis 180°C bevorzugt werden, lassen sie sich mit Wasser oder Kunststoffdispersionen zu Brandschutzmörteln mit guter Intumeszenzwirkung anrühren und auch als Fugenfüllmassen verwenden. Sie können auch in massiver oder durch Erhitzen auf Temperaturen zwischen 200 und 500°C expandierter Form als Füllstoffe für Kunstharze, Thermoplaste, Elastomere und Lacke verwendet werden.

Das Erhitzen gepulverter erfindungsgemäßer Umsetzungsprodukte in Formen oder ohne Formen auf Temperaturen über 200°C führt zu weitgehend mineralischen Schaumstoffen mit Raumgewichten von z.B. 100 bis 900g/l, die als nichtbrennbare Isoliermaterialien mit hoher Temperaturbeständigkeit verwendet werden können, z.B. als Sandwichs.

Von besonderem Interesse ist die Verwendung der erfindungsgemäßen Umsetzungsprodukte als in Lösung oder Pulverform anzuwendende Bindemittel für Vermikulite, Perlite und vor allem Graphite, die gegebenenfalls blähfähig, teilweise oder vollständig expandiert oder noch nicht expandiert sein können, zur Herstellung von gegebenenfalls expandierbaren Formteilen mit elektrischer- und Wärmeleitfähigkeit.

Auch der Zusatz erfindungsgemäßer Umsetzungsprodukte in wäßriger Lösung zu Glasuren, Emaille oder Keramikschlickern oder als Bindemittel für Keramiken ist möglich. Der Zusatz zu Lehm und Ziegelton führt bereits bei anschließender Lufttrocknung zu einer verbesserten Festigkeit und Feuchtigkeitsstabilität. Auch die Verfestigung von Erdschichten durch Injektion der Lösungen erfindungsgemäßer Umsatzprodukte ist möglich. Der Zusatz zu Papierpulpen führt zur verbesserter Beleimbarkeit und Trockenfestigkeit der daraus hergestellten Papiere.

In granulierter Form vorliegende erfindungsgemäße Umsetzungsprodukte können z.B. bei 130 bis 280°C zu klaren, massiven Formteilen verpreßt werden, die als Konstruktionselemente für den vorbeugenden Brandschutz Verwendung finden können, da sie in ungefüllter, gefüllter oder faserverstärkter Form bei Beflammung unter Intumeszenz zu hoch feuerwiderstandsfähigen, keramisierten Feuerbarrieren aufblähen.

Andererseits kann man solche Granulate durch Anwendung hoher Temperaturen z.B. in einem Heißluftstrom oder in einer Flamme, zu porösen Granulaten aufblähen, die Schüttgewichte zwischen beispielsweise 20 und 300 g/l aufweisen und als Isolier- und Verpackungsmaterial dienen können.

Die erfindungsgemäßen Umsetzungsprodukte weisen ganz allgemein Bindemittelcharakter auf, und sie haben den Vorteil, daß sie aus wäßrigen Lösungen bei Temperaturen weit unter 1000°C und damit auf einfache und kostengünstige Weise zugänglich sind. Sie weisen Temperaturbeständigkeiten auf, die bis zu über 1000°C reichen. Die erfindungsgemäßen Umsetzungsprodukte weisen überraschenderweise amorphen, glasartigen, in einzelnen Fällen auch thermoplastischen Charakter auf.

Man kann aus erfindungsgemäßen Umsetzungsprodukten enthaltenden Lösungen durch Trocknen bei Temperaturen von beispielsweise 180 bis 370°C, vorzugsweise 200 bis 350°C, wasserunlösliche, glasartige Aluminiumphosphate oder Aluminium-Bor-Phosphate abscheiden. Hierfür besonders geeignet sind z.B. Umsetzungsprodukte aus einem Mol Aluminiumhydroxid und etwa 2 Molen Ortho-Phosphorsäure, die mit Umsetzungsprodukten aus einem Mol Ortho-Borsäure und 2 oder mehr Molen eines Amins erhalten wurden. Hierbei sind Alkanolamine wie Monoethanolamin gegebenenfalls in Kombination mit Ammoniak, besonders geeignet. Derartige Zubereitungen bilden schon bei ca. 250°C aus wäßrigem Medium angewendet, unlösliche glasartige Beschichtungen mit Bindemittelcharakter. Ihre wäßrigen Lösungen weisen beispielsweise pH-Werte zwischen 3 und 9, vorzugsweise zwischen 4 und 8 auf. Solche Beschichtungen sind insbesondere für Metalle, Holz, Kunststoffe und Papier von Interesse.

Erfindungsgemäße Umsetzungsprodukte enthaltende Bindemittel, insbesondere solche im Bereich der bevorzugten Zusammensetzung, lassen sich schon bei niedrigen Temperaturen, beispielsweise zwischen Raumtemperatur und 250°C, aus wäßrigen Lösungen zu Klaren Filmen mit einer gewissen Flexibilität auftrocknen, die von Wasser nicht mehr gelöst werden und einen zwar deutlichen, aber moderaten intumeszenter Charakter aufweisen, was z.B. für feuerhemmende Anstriche von Interesse ist.

Da erfindungsgemäße Umsetzungsprodukte pro Aluminium und pro Bor nur jeweils annähernd eine Phosphatgruppe enthalten, entsteht bei höheren Temperaturen letztlich neutrales, bekanntermaßen unlösliches Aluminiumphosphat und Borphosphat, ohne Polyphosphat- oder Polyboratgruppierungen. Solche Polyphosphat- und Polyboratgruppierungen würden die Bindemittel hydrolysierbar machen, d.h. auf Dauer nicht wasserbeständig. Außerdem hat sich gezeigt, daß niedrige Borgehalte günstig sind und solche Produkte bei tieferen Temperaturen in den wasserunlöslichen Zustand übergehen. Schließlich sind aus Gründen der technischen und ökologischen Verfügbarkeit Produkte mit möglichst geringem Borgehalt als vorteilhaft anzusehen.

### Beispiele

Soweit nichts anderes gesagt ist, handelt es sich bei den Angaben von Teilen, Verhältnissen und Prozenten um Gewichtsteile und Gewichtsprozente.

### Beispiel 1

### Herstellung einer Aluminiumphosphatlösung

693 Teile einer wäßrigen 85 gew.-%igen Orthophosphorsäure und 200 Teile Wasser wurden auf 50°C erhitzt und dann unter Rühren 234 Teile pulverförmiges Aluminiumhydroxid eingestreut. Es wurde eine Stunde bei 100°C nachgerührt. Dabei bildete sich eine klare Lösung, die mit weiteren 150 Teilen kaltem Wasser versetzt und unter Rühren abgekühlt wurde.

### Beispiel 2

### Herstellung von Borsäure-Lösungen

a) 186 Teile Orthoborsäure wurden mit 50 Teilen Wasser und 305 Teilen Monoethanolamin versetzt und eine Stunde bei 70°C gerührt. Es bildete sich eine klare Lösung.
b) Es wurde wie bei a) verfahren, jedoch wurden weitere 62 Teile Monoethanolamin eingesetzt.
c) Es wurde wie bei a) verfahren, jedoch wurden zusätzlich weitere 183 Teile Monoethanolamin eingesetzt.
d) Es wurde wie bei a) verfahren, jedoch wurden zusätzlich 400 Teile einer 25 gew.-%igen wäßrigen Ammoniaklösung eingesetzt.
e) Es wurde wie bei a) verfahren, jedoch wurden zusätzlich 105 Teile Diethanolamin und 149 Teile Triethanolamin eingesetzt.
f) Es wurde wie bei a) verfahren, jedoch wurden noch zusätzlich 60 Teile Ethylendiamin und 40 Teile Triethylentetramin verwendet.

### Beispiel 3

### Herstellung erfindungsgemäßer Produkte

Die gemäß Beispiel 2 a) bis 2 f) hergestellten Lösungen wurden auf 70°C erhitzt und dann jeweils im Laufe von 30 Minuten unter intensiver Durchmischung die Aluminiumphosphatlösung aus Beispiel 1 hinzugeführt und 3 Stunden bei 90°C nachgerührt. Es entstanden jeweils klare Lösungen, die pH-Werte im Bereich von 5 bis 8 aufwiesen.

Sämtliche Lösungen trockneten bei Raumtemperatur und bei 90°C zu klaren Filmen auf. Die aus den Lösungen 2 a) und 2 b) hergestellten Produkte bildeten nach dem Abkühlen thixotrope Gele. Die aus den Lösungen 2 c), 2 e) und 2 f) erhaltenen Produkte bildeten gut gießfähige, viskose Flüssigkeiten. Das aus der Lösung 2 d) hergestellte Produkt war eine breiig-thixotrope Masse, die besonders gut für Anstrichs- und Beschichtungszwecke geeignet war.

Proben sämtlicher hergestellten Lösungen wurden bei 120°C getrocknet und, nach Zerkleinerung, in Form gut handhabbarer, nicht klebender Pulver erhalten.

### Beispiel 4

Aus den Produkten die gemäß Beispiel 3 aus den Lösungen 2 a), 2 b), 2 c), 2 e) und 2 f) erhalten worden waren, wurden Granulate mit mittleren Durchmessern im Bereich von 2 bis 5 mm hergestellt und auf einem Sieb aus wärmebeständigem Edelstahldraht durch eine mit ca. 900°C brennende Erdgasflamme geführt. Die Flammenstrecke war 150 cm lang, die Fördergeschwindigkeit betrug 0,5 m/min. Beim Flammenkontakt schäumten die Granulate um mehrere 100 Volumenprozente auf und bildeten Leichtschaumgranulate mit Schüttgewichten zwischen 20 und 80 g/l. Sie wurden noch 10 Minuten bei 350°C nachgeheizt und können dann nach Abkühlung als Isoliermaterial, z.B. für Hohlraumausschüttungen, verwendet werden. Sie haben den Vorteil wasserbeständig und nicht entflammbar zu sein.

### Beispiel 5

Ein Baumwollappen wurde mit einer 10 gew.-%igen wäßrigen Lösung des gemaß Beispiel 3 aus der Lösung 2 c) hergestellten Produkts getränkt und ausgequetscht. Nach dem Trocknen wurde der Lappen geplättet. Beim Plätten erhielt man eine appreturartige Versteifung des Materials, das außerhalb einer Zündflamme nicht mehr weiter brannte.

### Beispiel 6

Mit einer auf 70°C erhitzten Lösung, hergestellt gemäß Beispiel 3 aus der Lösung 2 b), wurde ein entfettetes Stahlblech etwa 1 mm dick beschichtet. Nach dem Abkühlen befand sich auf dem Blech eine fest haftende Gelschicht, die bei Raumtemperatur auftrocknete. Nunmehr wurde das Blech durch ein anliegendes Heizelement rückseitig auf 350°C erhitzt. Dabei schäumte das auf der anderen Seite des Blechs befindliche Beschichtungsmaterial auf und bildete einen Isolationsschaum. Derartige Bleche können im Ofenbau Verwendung finden. Bei erstmaliger Inbetriebnahme des Ofens bildet sich dann die inwendig erwünschte Isolationsschicht in den Hohlräumen.

### Beispiel 7

Mit einer Lammfellrolle wurde die gemäß Beispiel 3 erhaltene Lösung, die mit dem Produkt aus dem Beispiel 2 d) hergestellt worden war, auf ein 3 mm dickes Buchensperrholz aufgetragen. Nach dem Auftrocknen erhielt man einen 1,5 mm dicken Beschichtungsfilm auf der Holzobeffläche der gegen Spritzwasser beständig war.
Ein 30 x 30 cm großes Stück dieses Sperrholzes wurde mittig auf der Beschichtungsseite in waagerechter Lage mit der Flamme eines Erdgasbunsenbrenners (ca. 1000°C) eine Minute lang beflammt.
An der Beflammungsstelle bildete sich ein mehr als 1 cm dickes Gebilde aus keramisiertem Intumeszenzschaum während die Holzrückseite nahezu unverändert blieb. Es fand kein Nachbrennen statt. Mit derartig einseitig oder beidseitig beschichteten Flächen können hölzerne Brandschutztüren hergestellt werden.

Ein unbehandeltes entsprechendes Buchensperrholz brannte bei diesem Test ab, die Rückseite war bereits nach 30 Sekunden braun verfärbt.

### Beispiel 8

Es wurde gearbeitet wie in Beispiel 7, jedoch wurde eine Produktlösung verwendet, die aus der Lösung des Beispiels 2 c) erhalten worden war. Diese Lösung war dünnflüssiger und hatte deshalb ein besseres Eindring- und Imprägniervermögen. Der erhaltene Film war Klar und rißfrei. Das Beflammungsergebnis war mit dem des Beispiels 7 vergleichbar.

Analoge Ergebnisse wurden erhalten, wenn man eine Lösung verwendete, die zusätzlich 6 % Rußpigment oder 8 % Titandioxidpigment enthielt.

### Beispiel 9

Ein 3 mm dickes Filzband aus Kaolinfasern wurde zweimal satt mit einer Lösung getränkt, die gemäß Beispiel 3 aus der Lösung 2 c) hergestellt worden war und anschließend angetrocknet. Es wurden 1 900 g Feststoff pro m² aufgenommen. Das Band wurde bei Raumtemperatur und einer Luftfeuchtigkeit von 70 % konditioniert und anschließend in eine Fuge zwischen zwei Schamottsteinen eingebracht. Dann wurde die Fuge 2 Stunden lang mit einem Ölbrenner beflammt, wobei Temperaturen bis 1200°C erreicht wurden. Nach dem Brandversuch, bei dem in der 2 cm tiefen Fuge der Raumabschluß gewahrt worden war, wurde die Fuge begutachtet. Es zeigte sich, daß die gesamte Fuge mit einem keramisierten Material vollständig ausgefüllt und geschlossen war.

### Beispiel 10

Die aus Lösung 2 d) gemäß Beispiel 3 erhaltene Lösung wurde bei 120°C getrocknet und pulverisiert. Dann wurden die Anteile zwischen 0,3 und 0,8 mm Korndurchmesser herausgesiebt. Davon wurden in einem mit Aluminiumfolie ausgekleideten 1 m²-Stahl-Plattenform von 3 cm innerer Höhe 5 500 g dieses Granulats eingestreut. Die verschlossene Form wurde in einen auf 600°C vorgeheizten Ofen gebracht und 1 Stunde bei dieser Temperatur gehalten, wobei sich abspaltende Gase aus der Form an den Kanten entweichen konnten. Dann wurde der Ofen innerhalb von 12 Stunden langsam abgekühlt und der Form eine Platte aus feinporig-aufgeschäumtem mineralischem Material entnommen. Das Raumgewicht der Platte betrug 150 g/l. Derartige Platten können als Isolationsmaterial bei hohen Temperaturen verwendet werden.

### Beispiel 11

Ein handelsübliches Papier (Kraft-Type) wurde satt mit der Lösung getränkt, die gemäß Beispiel 3 aus der Lösung des Beispiels 2 c) erhalten worden war, dann abgequetscht und bei Raumtemperatur getrocknet. Das so imprägnierte, flexible Papier ließ sich durch Beflammung in ein keramisiertes Material überführen, ohne zu brennen. Mit derartigem Papier können provisorische Brandschutzbarrieren installiert werden, indem man Knäuel des Papiers in zu schützende Mauerdurchbrüche oder Kabeldurchführungen einbringt oder indem man Kunststoffrohre mit solchen Papieren umwickelt.

### Beispiel 12

Mullbinden wurden mit einer 1 mm dicken Schicht des Gels beschichtet, das aus Lösung 2 b) gemäß Beispiel 3 erhalten worden war. Im feuchten Zustand blieben die Binden flexibel und aufrollbar, in getrocknetem Zustand wurden sie starr und mechanisch stabil. Sie wurden in feuchtem Zustand um ein zu schützendes Kunststoffrohr gewickelt. Bei Flammeinwirkung war dieses dann mechanisch stabilisiert und thermisch isoliert.

Im Falle der Verwendung von Bindenmaterial aus thermoplastischen Fasern (Gemisch aus Polyamid und Polyester) wurde ein gutes Aufschäumen der gewickelten Schutzbandage beobachtet.

### Beispiel 13

Gemäß Beispiel 3 aus der Lösung 2 d) hergestellte Lösung wurde bei 120°C getrocknet und in einer Kugelmühle pulverisiert. Anschließend wurden 150 Teile dieses Materials in 100 Teilen Ethylen-Vinylacetat-Copolymer (Vinylacetatgehalt 45 %) eingearbeitet. Aus dieser Mischung wurde eine 3 mm dicke, peroxidisch vernetzte Platte gepreßt und beflammt. Im Flammenbereich bildete sich aus dem Elastomer eine aufgeschäumte, poröse, mechanisch stabile und isolierende Masse. Bei Verwendung dieser Mischung als Kabelmantelmaterial brennt sie nicht weg, sondern bildet eine elektrisch und thermisch isolierende Schutzhülle.

### Beispiel 14

In einen offenporigen Streifen aus Polyurethan-Weichschaum wurde bei 85°C die Lösung eingearbeitet, die aus Beispiel 2 a) gemäß Beispiel 3 hergestellt worden war. Dann wurde abgekühlt, wobei die Lösung gelartig erstarrte und den Schaumstoff unter Beibehaltung seiner Flexibilität ausfüllte. Der so behandelte Schaumstoff wurde in eine Polyolefinfolie eingesiegelt und war so lagerfähig, d.h. er trocknete nicht unter Erhärtung aus. Der verpackte Schaumstoff wurde in ein Kabelschott eingedrückt, was aufgrund der Flexibilität und sauberer, leichter Handhabbarkeit gut möglich war. Dann wurde die Verpackung geöffnet, worauf Trocknung zu einem festen Verschluß eintrat. So wurde das Schott problemlos verschlossen und erwies sich im Brandfall gegen den Durchtritt von Rauch und Hitze als geschützt.

### Beispiel 15

In einen handelsüblichen Alkydharzlack wurde das gemäß Beispiel 10 erhaltene Pulver im Verhältnis 1:1 eingearbeitet. Mit dem Material wurde eine Fichtenholzplatte beschichtet und nach dem Aushärten des Lacks beflammt. An der Beflammungsstelle bildete sich eine poröse, isolierende Schicht aus mineralischem Material, die das Holz vor Entflammung und Durchbrennen schützte.

### Beispiel 16

In eine styrolhaltige, polymerisationsfähige Zubereitung eines handelsüblichen ungesättigten Polyesterharzes wurde im Verhältnis 1:1 das gemäß Beispiel 13 erhaltene Pulver eingearbeitet. Mit dem Harz wurde eine Glasvliesmatte imprägniert und zu einem Rohr gewickelt. Nach dem Aushärten wurde das Rohr beflammt. Hierbei entzündeten sich zwar die entstehenden Pyrolysegase des organischen Materials, das Rohr als solches blieb aber mechanisch erhalten und wurde an der Beflammungsstelle keramisiert.

Mit derartigen Rohren lassen sich demnach Schutzvorrichtungen für elektrische Leitungen und Schaltemente herstellen.

### Beispiel 17

Melamin und gemäß Beispiel 3 aus Lösung 2 c) erhaltene Lösung wurden im Verhältnis 1:1 gemischt. Man erhielt eine gut streichfähige Mischung, die auf Holz aufgestrichen wurde. Nach dem Trocknen wurde mit einem Gasbrenner beflammt. An der Beflammungsstelle bildete sich ein porös-keramischer Intumeszenzschaum, und das Holz entflammte nicht.

Der gleiche Anstrich wurde auf ein Aluminiumblech aufgebracht, das beim Beflammen, im Gegensatz zu einem unbehandelten entsprechenden Aluminiumblech, nicht zusammenfiel und nicht schmolz.

### Beispiel 18

Ein Edelstahl-Drahtsieb mit einer Maschenweite von 2 mm wurde so oft mit der Lösung, erhalten gemäß Beispiel 3 aus der Lösung 2 c), getränkt und getrocknet, bis die durchschnittliche Maschenweite durch Ummantelung der Drähte auf 1 mm reduziert war. Durch dieses Sieb wurde ein Heißluftstrom mit einer Temperatur von 400°C geleitet. Dabei blähte sich die Beschichtung auf und schloß das Sieb. Solche Siebe können als Flammensperren in Belüfungsanlagen Verwendung finden.

## Patentansprüche

1. Umsetzungsprodukte aus einer Aluminiumverbindung (A), einer Bor enthaltenden Säure (B), einer Phosphor enthaltenden Säure (P) und eines Amins (N), dadurch gekennzeichnet, daß
1 Mol (A) mit
0,3 bis 1,19 Molen B,
(1,8 bis 2,19) + x Molen P und
(0,3 bis 3,69) + y Molen N
umgesetzt wurde, wobei gilt
x = -1,5 bis +1,5 und
y = 0 bis 12,
wobei diese Umsetzungsprodukte gegebenenfalls bis zu 30 Mol Wasser pro Mol eingesetztes A enthalten.

2. Umsetzungsprodukte nach Anspruch 1, dadurch gekennzeichnet, daß
1 Mol A mit
0,8 bis 1,19 Molen B,
1,8 bis 2,19 Molen P und
1,8 bis 3,19 Molen N umgesetzt wurde,
wobei diese Umsetzungsprodukte gegebenenfalls bis zu 12 Mol Wasser pro Mol eingesetztes A enthalten.

3. Umsetzungsprodukte nach Ansprüchen 1 und 2, dadurch gekennzeichnet, daß sie in 5 bis 95 gew.-%iger wäßriger Lösung oder in bei 10 bis 180°C getrockneter, gegebenenfalls pulverisierter Form vorliegen.

4. Umsetzungsprodukte nach Ansprüchen 1 bis 3, dadurch gekennzeichnet, daß sie erhalten wurden durch Umsetzung einer Aluminiumverbindung mit einer Phosphor enthaltenden Säure in 30 bis 85 gew.-%ige Medium bei 50 bis 100°C, durch Umsetzung einer Bor enthaltenden Säure mit einem Amin oder Amingemisch, gegebenenfalls in Gegenwart von Wasser bei 10 bis 120°C und Vermischen der beiden so erhaltenen Umsetzungsprodukte bei 50 bis 120°C.

5. Umsetzungsprodukte nach Ansprüchen 1 bis 4, dadurch gekennzeichnet, daß sie erhalten worden sind durch Umsetzung von Aluminiumhydroxid, Ortho-Borsäure, Ortho-Phosphorsäure und Mono-, Di- und/oder Triethanolamin und/oder Ammoniak.

6. Verwendung der Umsetzungsprodukte nach Ansprüchen 1 bis 5 als Bindemittel, wobei die Abbindung durch Tempern bei 100 bis 600°C erfolgt.

7. Verwendung der Umsetzungsprodukte nach Ansprüchen 1 bis 5 als Beschichtungen für Metalle, Holz, Kunststoffe und Papier.

8. Verwendung nach Anspruch 6, dadurch gekennzeichnet, daß man Papier, Holz, Membranen, porösen Kohlenstoff, organische und anorganische Vließstoffe, Schaumstoffe, Gewebe, Gewirke, Gestricke, Gelege, Geflechte und Stränge mit Umsetzungsprodukten nach Ansprüchen 1 bis 5 tränkt.

9. Verwendung der Umsetzungsprodukte nach Ansprüchen 1 bis 5 als Appretur für Textilien, als Sequestriermitel für Waschmittel, als Zusatz zu Zementen, Gips und Mörteln, als Fugenfüllmasse, als Füllstoffe für Kunstharze, Thermoplaste, Elastomere und Lacke, als nichtbrennbare Isoliermaterialien, als Bindemittel für Metallpulver, Vermikulite, Perlite und Graphite, die gegebenenfalls blähfähig, teilweise oder vollständig expandiert oder noch nicht expandiert sein können, als Zusatz zu Glasuren, Emaille, Keramikschlickern, Lehm und Ziegelton, zur Verfestigung von Erdschichten, als Zusatz zu Papierpulpen, zur Herstellung von Formteilen und als Isolier- und Verpackungsmaterialien.
